# EUROPEAN PATENT APPLICATION

(11) **EP 4 733 157 A1**
(43) Date of publication of application: **29.04.2026**
(21) Application number: 24208287.3
(22) Date of filing: 23.10.2024
(51) Int. Cl.: B60T 13/66, B60T 13/68, B60T 7/12, B60T 13/38, B60T 13/26

(54) **METHOD FOR PROVIDING A SECONDARY PARKING BRAKE OPERATION OF A COMMERCIAL VEHICLE**

(71) Applicant: KB Intellectual Property GmbH & Co. KG, 82049 Pullach (DE)
(72) Inventor: LEIBBRAND, Jonas, 71735 Eberdingen-Nußdorf (DE); JUNDT, Oliver, 74394 Hessigheim (DE); THIGALE, Swapnil Balkrishna, 74321 Bietigheim-Bissingen (DE); HECKER, Falk, 71706 Markgröningen (DE); SCHÄFERS, Andreas, 71739 Oberriexingen (DE)

(57) **Abstract**

A method for providing a secondary parking brake operation of a commercial vehicle is disclosed. The commercial vehicle comprises a brake system (200) with an air reservoir (220), spring brake(s) (230), a parking brake system (210) including a primary parking brake operation, the parking brake system (210) being configured to activate the spring brakes (230) automatically when a pressure in the air reservoir (p_{supply}) drops below a threshold pressure (p_{threshold}). The method comprises the steps of bringing (S110) the commercial vehicle to a standstill and lowering (S120) the pressure in the air reservoir (p_{supply}) to the threshold pressure (p_{threshold}) to activate the spring brake(s) (230) as a secondary parking brake operation.

## Description

The present invention relates to a method for providing a secondary parking brake operation of a vehicle, in particular, to a method of applying parking brakes in commercial vehicles when the primary electronic parking brakes system is not functional.

The actuation of a parking brake can be performed with pneumatically controlled hand brake mechanism or through an electronic parking brake system (EPB). In case of non-autonomous vehicles, the electric parking brake is activated by the driver with a hand control unit from the cabin. This sends a signal that deflates the air from the spring brake chamber which results in the application of spring brake force that can keep the vehicle in immobilized state even when electrically the vehicle is completely powered down.

A failure in the electric parking brake system will prevent this function from being performed. In addition, if the vehicle is parked on a slope such that the brake force to hold the vehicle is more than the actual capacity of the spring brakes, the vehicle can move or roll away (forward or backward) even in case of functional EPB system. Especially in heavy vehicles, any unintended movement can posing a danger to nearby people, vehicles, or property due to the weight and the momentum of the vehicle.

There are some conventional methods known to overcome this problem and to implement the secondary park actuation that is sufficiently independent from single point failures that can occur in the primary parking brake operation of the EPB (e.g. separate electronic power supply, separate controller, separate communication to command the system to execute the park function).

For example, US 11 407 394 B2 discloses a redundant parking brake system for an autonomous vehicle. However, this is achieved by adding additional electronically controlled parking brake valves that are actuated by any controller.

At least some of these problems as described before are overcome by a method for providing a secondary parking brake operation according to claim 1 or a parking brake system according to claim 12. The dependent claims refer to further advantageous realizations of the subject matter of the independent claims.

The present invention relates to a method for providing a secondary parking brake operation of a commercial vehicle. The commercial vehicle may be a towing vehicle (e.g., a truck, a tractor) with one or more towed vehicles (e.g., one or more trailers). The commercial vehicle comprises a brake system with an air reservoir, one or more spring brakes, and a parking brake system including a primary parking brake operation.

The parking brake system is configured to activate the one or more spring brakes automatically when a pressure in the air reservoir drops below a threshold pressure.

The method for providing a secondary parking brake operation comprising the steps of:
- bringing the commercial vehicle to a standstill; and
- lowering the pressure in the air reservoir to the threshold pressure to activate the one or more spring brakes as secondary parking brake operation.

According to embodiments, here and in the following the method steps for providing a secondary parking brake operation are performed in the specified order. Furthermore, the parking brake system according to embodiments is a redundant parking brake system allowing primary parking brake operation and a secondary parking brake operation (e.g. usable as a backup if the primary parking brake operation exhibits a malfunction.

It is to be understood that the vehicle at a standstill refers to a complete stop or the absence of movement of the vehicle. Therefore, the vehicle is not in motion and remains stationary.

Optionally, the brake system may include a compressor for providing the pressure in the air reservoir. Optionally, the step of bringing the commercial vehicle to a standstill may include deactivating the compressor. Therefore, the compressor stops supplying air, which allows the spring brake(s) to engage fully, keeping the vehicle stationary.

It is to be understood that the spring brakes (e.g., utilizing a spring brake chamber) are designed to hold the commercial vehicle in place when parked by mechanically applying the brakes through the force of springs. Supplying air to the spring brakes would release them, which could inadvertently cause the vehicle to move if left in an unsafe state.

The following are some non-limiting cases, where the risk of an unsafe state of the parked vehicle could arise:
- the virtual or human driver has made incorrect judgement regarding slope, loading condition and applied parking brakes;
- the virtual or human driver has received incorrect information of slope, loading condition and applied parking brakes.

For example, the parked vehicle may be considered unsafe when the vehicle is parked on inclines, declines or uneven surfaces where the spring brake force (e.g., at the axles where the spring brakes are installed) is not sufficiently higher than the force of gravity, depending on the vehicle load. Gravity or external forces can move the vehicle in this unstable position.

Optionally, the brake system may include at least one brake cylinder associated with at least one wheel having a brake pressure.

Optionally, the step of lowering the pressure in the air reservoir may include activating a first mode of the secondary parking brake operation by depleting the reservoir pressure through a pressure control valve.

In some embodiments, only one pressure control valve is sufficient to deflate air from the air reservoir while the other pressure control valves of remaining wheels can be used and brake when service brakes are applied. This may allow to keep the commercial vehicle at a standstill on a slope.

In some embodiments, multiple pressure control valves can be activated to reduce the brake pressure in the first mode of the secondary parking brake operation. It is to be understood, that multiple pressure control valves in the first mode of the secondary parking brake operation (e.g., deflate state) allow faster depleting of air, but on the other hand, such an arrangement provides less braking force.

Optionally, the at least one brake cylinder associated with at least one wheel may be selected to be one or more of the following:
- being on a commercial vehicle side towards the middle of the road or opposite thereto (e.g. the left-hand side, the right-hand side, the driver side, opposite to the driver side),
- being on a steered axle,
- being on a non-steered axle,
- being on the truck/tractor or on the one or more trailers.

In some embodiments, among the brake cylinders installed on the commercial vehicle, one or more brake cylinders can be selectively chosen when the secondary parking brake operation is activated.

The number of the selected brake cylinders may vary depending on the loading condition of the vehicle (e.g., unloaded, partially loaded, fully loaded) and the steepness of the slope (e.g., shallow slope, steep slope).

The selected brake cylinder(s) can be one or more of the front brake cylinders and/or one or more of the rear brake cylinders. Likewise, the selected one or more brake cylinders can be on the steered axle, and/or on the non-steered axle. In addition, the selected one or more brake cylinders can be on the towing vehicle and/or on the one or more trailers.

One of the advantages of deliberately selecting one or more brake cylinders is to avoid critical situations by reacting quickly to an unsafe state of the parked vehicle. A critical situation can be, for example, when the commercial vehicle is parked on a slope, near a precipice or in any other drop-off position (e.g., on the dangerous side of the road).

Other critical situations may be due to the presence of liquids and/or solid materials on the road (e.g., sand, dust, snow, ice, leaves, water, oil, etc.) which can result in inhomogeneous road friction. The selection may also based on the avoidance of noise and/or the availability of the braking force. Therefore, the unsafe state of the parked vehicle can be secured by selectively choosing one or more brake cylinders.

Optionally, the brake system may provide a control pressure. Optionally, the brake system may include a brake booster for providing a first control pressure to a foot brake module and/or at least one electro-pneumatic module for modulating the brake pressure in response to a second control pressure. The control pressure can be the first control pressure and/or the second control pressure.

In some embodiments, the first control pressure and second control pressure may be the same. In some embodiments, the first control pressure and second control pressure are different.

Optionally, the step of lowering the pressure in the air reservoir may include activating a second mode of the secondary parking brake operation by using the brake booster and/or by using the at least one electro-pneumatic module to change periodically the control pressure.

Optionally, the brake system may include a service brake that controls braking operations during driving the commercial vehicle.

Optionally, the step of changing periodically the control pressure may include adapting a time interval of periods of the periodic changing, wherein the adapted time interval ensures a minimum brake pressure to hold the commercial vehicle at a standstill.

For example, the longer the time interval of periods of the periodic changing the control pressure the more air is released and the less becomes the air in the brake chambers.

It is to be understood that the minimum brake pressure (e.g., a release pressure) corresponds to a pressure level at the brake chambers at which the brake release ends and the next brake application begins. However, the control pressure at the actuator may drop to 0 bar if the frequency is sufficiently high and the apply/release interval ratio ensures to maintain a minimum brake pressure at the brake chambers, using the natural damping/delay from the brake system design when the pressure output at the actuator is compared with the damped/delayed pressure at the brake chamber at the wheel end.

One of the advantages of periodically change the control pressure is that the value of the release pressure (minimum brake pressure) ensures partial braking even when the service brake is released, keeping the vehicle at a standstill.

Optionally, the brake system may include a pressure sensor configured to monitor the control pressure and/or the brake pressure. Optionally, the step of adapting the time interval may include determining a minimum brake pressure and/or a minimum control pressure associated to the minimum brake pressure utilizing the pressure sensor.

In some embodiments, the pressure sensor may be located between the foot brake module and the at least one electro-pneumatic module. In some embodiments, the pressure sensor may be located between the foot brake module and the brake booster.

For example, the pressure sensor can provide pressure values or can communicate (e.g. send a CAN message) with the electronic control unit of the brake system. The pressure sensor can be located anywhere downstream and generally is connected and supplied via some analog interface to the ECU.

It is to be understood that the minimum control pressure (e.g. a roll pressure) corresponds to a pressure level at which there is insufficient braking force to keep the vehicle at a standstill. Therefore, reaching the minimum control pressure may cause the vehicle to start moving (e.g., rolling), for example, when the vehicle is parked on a slope or is in other unsafe state.

In some embodiments, the pressure sensor is adapted to detect when the pressure has dropped to a critical pressure range and may send a warning message to the electronic control unit of the brake system. For example, the critical pressure range (e.g., a predetermined gap) is between the minimum control pressure (e.g. a roll pressure, when the vehicle starts moving) and the minimum brake pressure (e.g., a release pressure, when the brake release stops).

Optionally, the step of bringing the commercial vehicle to a standstill may include performing a roll test of the commercial vehicle to ensure that the commercial vehicle remains at a standstill when starting the secondary parking brake operation.

It is to be understood that the roll test is carried out before the pressure in the reservoir is reduced, therefore the compressor is still running to supply air to the air reservoir.

An advantage of the roll test is that it can be used to determine whether the vehicle is safe to park in the chosen location and to determine whether there is a risk of an unsafe state.

In some embodiments, the roll test may include at least one of the following steps:
- activating the service brake with a brake force which is equivalent to the spring brake force (only) at the axles where the spring brakes are installed (this may be important when there is inhomogeneous road friction for the individual wheels of the vehicle combination);
- waiting for a predetermined period of time;
- ascertaining that the roll test has been passed when the commercial vehicle remains at a standstill during the roll test.

According to embodiments the steps of the roll test may be performed in the specified order.

It is important to determine the feasibility of the vehicle to remain at a standstill on a given slope, loading condition and other unsafe state, when the parking brakes are engaged, and only the mechanical spring force is holding vehicle at a standstill on the given slope.

Therefore, if adequate information regarding the feasibility of holding the vehicle at a standstill on a given slope, the loading condition and other unsafe state of the vehicle is not available, the steps of the roll test are performed.

In some embodiments, the roll test may include at least one of the following steps:
- activating the service brake by providing brake pressure (e.g. at all wheel ends), the brake pressure associated to the threshold pressure utilized in the secondary parking brake operation;
- waiting for a predetermined period of time;
- ascertaining that the roll test has been passed when the commercial vehicle remains at a standstill during the roll test.

It is understood that both embodiments of the rolling test can be combined before the secondary park brake application is executed.

According to embodiments the steps of the roll test may be performed in the specified order.

It is important to determine the feasibility of the vehicle to remain at a standstill on the given slope, loading condition and other unsafe state, when the parking brakes are not yet engaged, and the available service brake pressure is equal to threshold pressure (the pressure when spring brakes are just starting to engage but not fully engaged).

It is to be understood that the step of deactivating the compressor is only performed when the roll test has been passed. Therefore, the roll test is performed before the actual depleting of the reservoir pressure is started.

One advantage of performing the steps of the roll test is to ensure that the parking brake system (the parking brake system including the primary parking brake operation and the secondary parking brake operation) is able to stop the vehicle safely even on slopes or other unsafe state, and deals with the risk that the pump down process cannot be reversed or reliably aborted to reapply the service brakes when the vehicle starts to roll away.

Pumping down or pump down process is a term used to describe the action of applying and releasing brake pressure by the human driver to deflate the reservoir pressure manually through brake pedal. This method is traditionally used to deplete the reservoir pressure to a point where the parking brakes (spring brakes) are automatically engaged.

Pumping down or pump down process in the parking brake system according to embodiments is a method through which the parking brakes can be applied safely in case of a failure of the primary parking brake operation (e.g. electronic parking brake system). In this embodiment, pump down process is performed autonomously by the system using the existing standard electronic service brake system components to deflate the supply reservoir pressure (e.g., air reservoir pressure).

One advantage of the pump down process is that the presence of a human driver manually hitting the brake pedal is not required and therefore this method is suitable for autonomous vehicles.

In some embodiments, the pumping down is performed by a human driver. In some embodiments, the pumping down is performed either autonomously or by a human driver.

Optionally, the brake system may include wheel speed sensors configured to detect a wheel speed of the at least one wheel and send a message to the electronic control unit.

Optionally, the step of bringing the commercial vehicle to a standstill may include measuring the wheel speed. Therefore, at a standstill, the wheel speed sensors detect and confirm the absence of wheel rotation.

If the wheel speed sensors detect the presence of wheel rotation during the roll test, the service brakes may increase the pressure to stop the rolling vehicle and to allow the driver or the autonomous vehicle to drive to a new location.

Embodiments also relates to a parking brake system for a commercial vehicle. The parking brake system comprises an electronic control unit including a processor and a memory with stored instructions that, when executed on the processor, to cause to perform the steps of the method for providing a secondary parking brake operation.

The electronic control unit is configured to receive messages or signals (e.g. via CAN communication or other signal lines), for example, from the pressure sensor, from the wheel speed sensors and from other sensors in the brake system. For example, other sensors can be steering angle sensors, lining wear sensors, road wheel angle sensors, a sensor of an inertial measurement unit.

Embodiments relates also to a commercial vehicle, the commercial vehicle having a truck or a tractor with one or more trailers and includes the parking brake system.

Embodiments are suitable in particular for road vehicles and trailer combinations, which are predominantly commercial vehicles that comprises two or more connected units, typically towing vehicles (e.g., truck, tractor) and one or more towed vehicles (e.g., trailers), but may also include small trailers and caravans, which may be towed by passenger cars and light vans, or for example articulated commercial vehicles comprising tractors and semi-trailers.

Some examples of the methods and systems will be described in the following by way of examples only, and with respect to the accompanying figures, in which:
- Fig. 1: shows a flow diagram of a method for providing a secondary parking brake operation of a vehicle according to an embodiment;
- Fig. 2: shows a brake system of a commercial vehicle according to an embodiment;
- Fig. 3: shows a diagram of the parking brake activation status in conjunction with a pressure variation as a function of time according to an embodiment.
- Fig. 4: shows a diagram of the parking brake activation status in conjunction with a pressure variation as a function of time according to some embodiments;
- Fig. 5: shows a flow diagram of a steps of performing a roll test according to an embodiment;
- Fig. 6: depicts a pneumatic layout of the brake system according to an embodiment;
- Fig. 7: depicts an electronic layout of the brake system according to an embodiment.

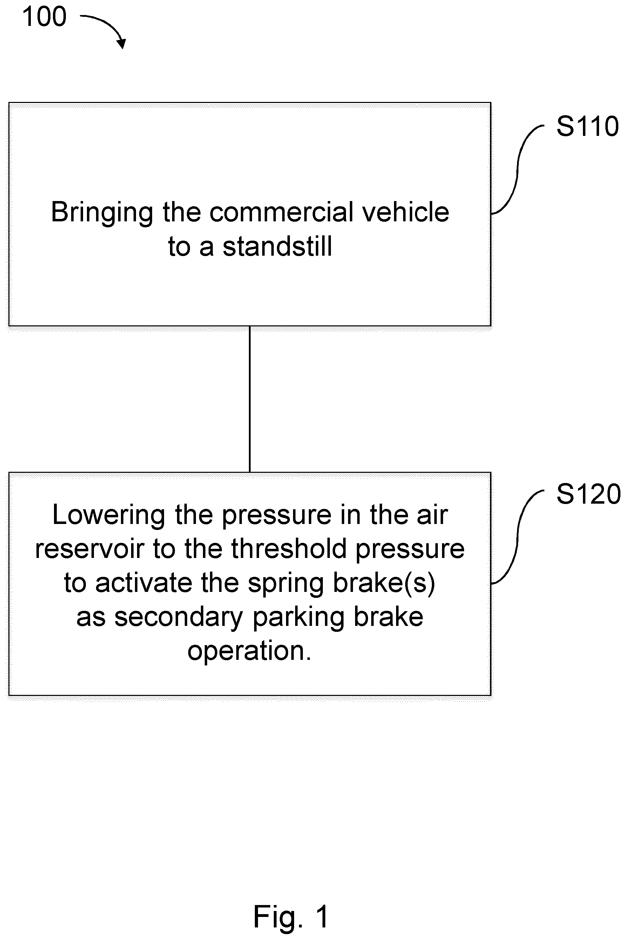

**Fig. 1** shows a flow diagram of a method for providing a secondary parking brake operation of a commercial vehicle.

The method 100 for providing a secondary parking brake operation comprises the steps of:
- step S110: bringing the commercial vehicle to a standstill; and
- step S120: lowering the pressure in the air reservoir, p_{supply}, to the threshold pressure, p_{threshold}, to activate the spring brakes as secondary parking brake operation.

The service brake is applied in step S110 after the commercial vehicle has been moved to the desired parking spot. The combustion engine is turned off and refilling of the supply air reservoir is also stopped. The electronic control unit of the brake system 200 controls the service brake pressure at the wheel ends, p_{wheel}, based on the pump down process 100, which causes a gradual drop in the air reservoir pressure.

The process 100 may actuate a valve (e.g., pressure control valve) that depletes air from the reservoir which is charging the spring brake chamber to release the spring brake force during normal driving operation. As soon as the air reservoir supply pressure drops below threshold pressure, p_{threshold}, the mechanical spring brakes are automatically engaged.

According to embodiments, releasing the pressure via the pressure control valves may include simultaneous application of the service brake via a valve that is directly connected to the reservoir (brake booster and/or electro-pneumatic modules), since the pressure control valves themselves may not have a direct reservoir connection.

In some embodiments, multiple air reservoirs (e.g., air tanks) can be exhausted for the execution of the pump down process 100.

It is be ensured that the towing vehicle is sufficiently braked during the pump down process 100 to prevent the vehicle from rolling away until the spring brake force can be applied. Preferably, the control pressure valve in use is already installed in the brake system and the control pressure valve is used to control the pressure at each wheel separately. Preferably, the brake system already includes a controller (e.g., electric control unit) which actuates the control pressure valve.

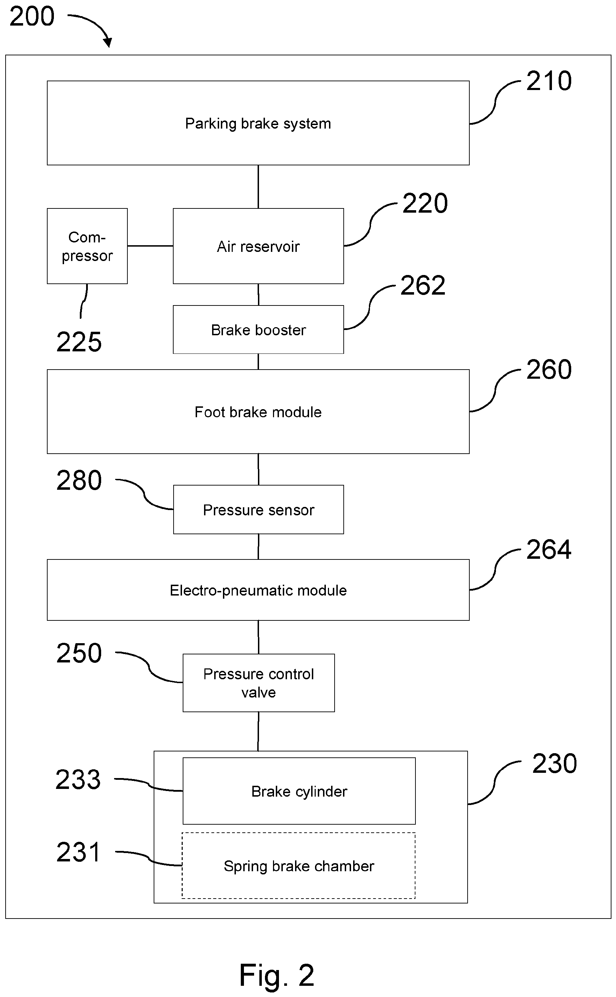

In more detail, Fig. 2 shows a brake system 200 of a commercial vehicle according to an embodiment of the present invention. The brake system 200 comprises an air reservoir 220, and a compressor 225 for providing the pressure in the air reservoir 220.

The brake system 200 further includes wheel brakes 230 (e.g., including a service brake and a spring brake) with at least one brake cylinder 233 associated with at least one wheel (not shown) having a brake pressure, p_{wheel}, wheel speed sensors (not shown) configured to detect a wheel speed of the at least one wheel, and a parking brake system 210. The parking brake system 210 includes a primary parking brake operation and a secondary brake operation.

The brake system 200 further includes a brake booster 262 for providing a first control pressure to a foot brake module 260 and at least one electro-pneumatic module 264 for modulating (e.g. for an axle) the brake pressure, p_{wheel}, in response to a second control pressure, and a pressure sensor 280. The pressure sensor 280 is configured to monitor the control pressure, p_{control}. Additionally, or alternatively, one or more other pressure sensors may be arranged at other locations to determined pressure values (e.g. brake pressure p_{wheel} at one or more wheels).

The brake system 200 includes a service brake that controls braking operations during driving the commercial vehicle.

For example, the pump down process 100 can be implemented into an existing brake system 200 if it is ensured that a single point failure does not impact the primary parking brake operation of the parking brake system 210 and the pump down functionality at the same time.

In the event of failure of the primary parking brake operation of the parking brake system 210, the electronic control unit can execute the pump down process 100 when needed or commanded. During the pump down process 100, the air from the air reservoir 220 (e.g., supply reservoir) is depleted through one or more pressure control valves 250 which can be configured to a specific state as described below:
- a first mode of the secondary parking brake operation 101 (e.g., deflate state);
- a second mode of the secondary parking brake operation 102 (e.g., build and release state).

Pressure control valves may have two valves which may allow four possible states: build up, hold, release and deflate. The latter can be used to release air directly from the pressure supply to the environment. In contrast, the pressure in the wheel can also be reduced by releasing pressure from the brake chamber. However, this would not lead to any air consumption.

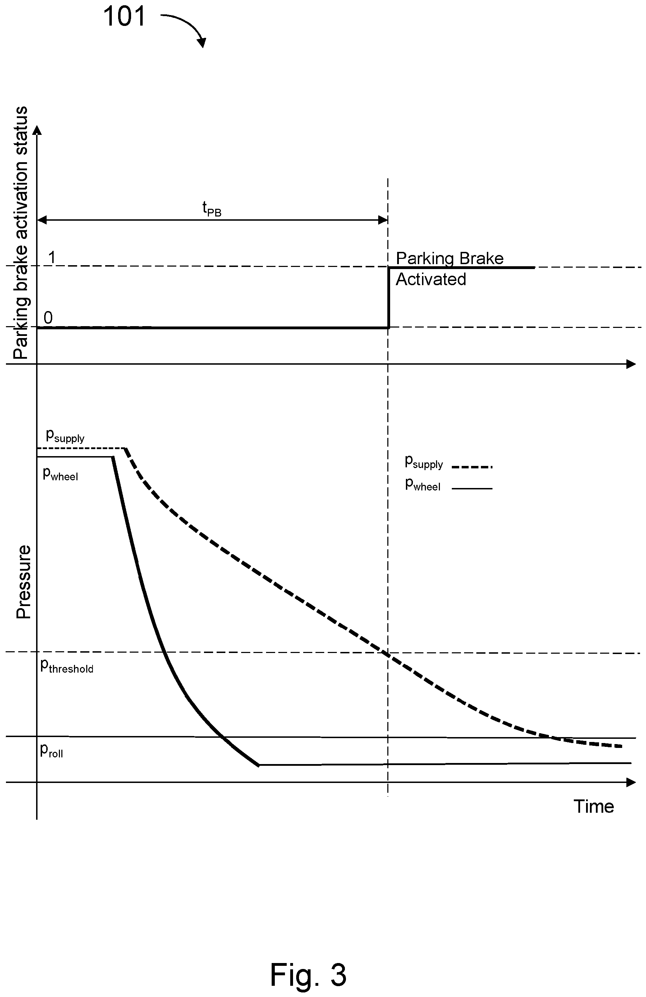

**Fig. 3** shows the first mode of the secondary parking brake operation 101. The pressure drop is shown on one wheel only. In this diagram, the parking brake activation status is shown in conjunction with a pressure variation as a function of time according to an embodiment.

The pressure control valve 250 at the wheel end can be set into the first mode of the secondary parking brake operation 101 (e.g., deflate state) during the pump down process 100. This state of the pressure control valve 250 allows the air from applied brake pressure, p_{wheel}, to directly deflate into the atmosphere without entering the wheel side brake chamber 231.

In the deflate state 101 of the one or more pressure control valves 250, the corresponding wheel is not braked as air pressure is directly deflated into atmosphere however, the deflate state 101 helps to reduce the pressure in the air reservoir 220 in faster manner. A continuous steady application of brake pressure is sufficient to release air from air reservoir 220 (e.g., supply reservoir) through the at least one pressure control valve 250 in the first mode of the secondary parking brake operation 101.

**Fig. 3** further shows the brake pressure at the wheel ends, p_{wheel}, and the air reservoir pressure, p_{supply}, of the corresponding pressure circuit when the pressure control valve 250 is set into the first mode of the secondary parking brake operation 101. Optionally, this may include the pump down process 100. As soon as the pressure drops below the threshold pressure, p_{threshold}, the parking brakes are automatically engaged. The activation time of the parking brake, t_{PB}, may be the time taken for the pump down process 100 to engage the secondary parking brake operation.

It is to be understood that only one pressure control valve 250 is sufficient to deflate air from the air reservoir 220 while the pressure control valves 250 of remaining wheels can be used in the second mode of the secondary parking brake operation 102 (e.g., build state) and brake when service brakes are applied.

One of the advantages of the first mode of the secondary parking brake operation 101 is to keep the vehicle at a standstill on a slope. Therefore, not all pressure control valves 250 are set into deflate state 101 (i.e. first mode of the secondary parking brake operation) and depending on the steepness of the slope and loading condition of the vehicle, one or more pressure control valves 250 can be set into deflate state 101 during the pump down process 100.

Depending on the loading condition of the vehicle (e.g., unloaded, partially loaded, fully loaded) and the steepness of the slope (e.g., shallow slope, steep slope) more than one pressure control valve 250 in the first mode of the secondary parking brake operation 101 can be actuated.

In addition, the pressure control valve 250 associated with the at least one brake cylinder 233 may be selected to be any of the following:
- being on a driver side or opposite thereto,
- being on a steered axle,
- being on a non-steered axle,
- being on the towing vehicle or on the one or more towed vehicles.

Actuating multiple pressure control valves 250 allows the air to be exhausted more quickly from the air reservoir 220, but on the other hand, such a setup provides less braking force during the pump down process 100.

The use of different pressure control valves, connected to different pneumatic circuits (e.g. front and rear circuit) with individual reservoirs, can be necessary to deplete separate reservoirs if protection valves ensure that a single depleted reservoir will not lead to some spring brake engagement.

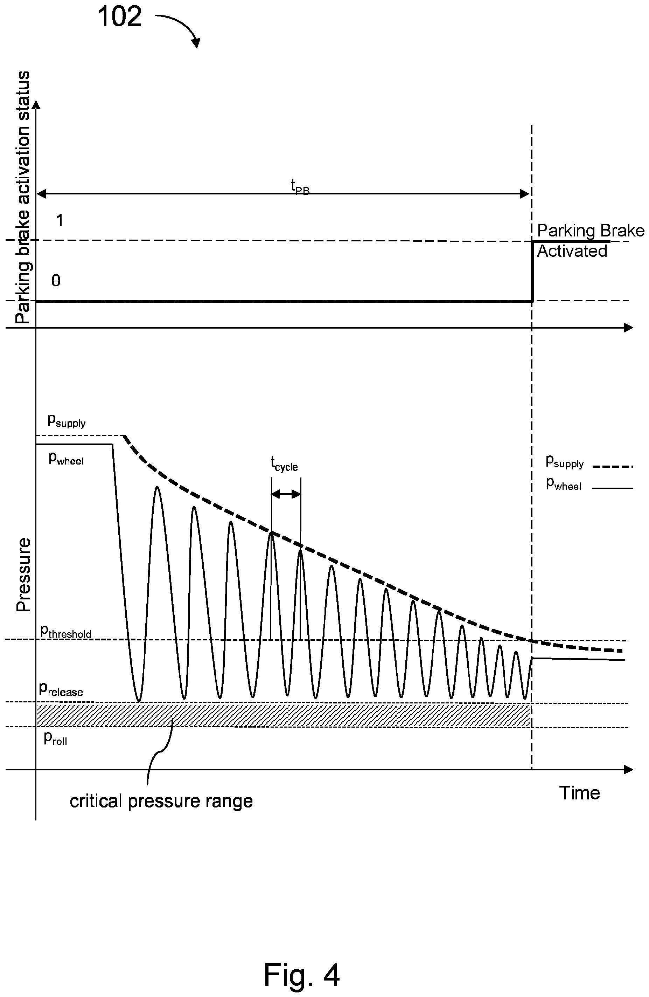

**Fig. 4** shows the second mode of the secondary parking brake operation 102. The pressure drop is shown on one wheel only. In this diagram, the parking brake activation status is shown in conjunction with a pressure variation as a function of time according to some embodiments.

The pump down process 100 can also be carried out without using the first mode of the secondary parking brake operation 101 (e.g., deflate state) and using the one or more pressure control valves 250 located at the wheel end.

In the second mode of the secondary parking brake operation 102 (e.g., build state) the brake pressure, p_{wheel}, is periodically applied to the brake chamber(s) 231 to apply and releasing the brake force. The (periodic) pressure application can be done by one or more different valves, mounted on various locations such as a electro-pneumatic module or one or more of the pressure control valves 250.

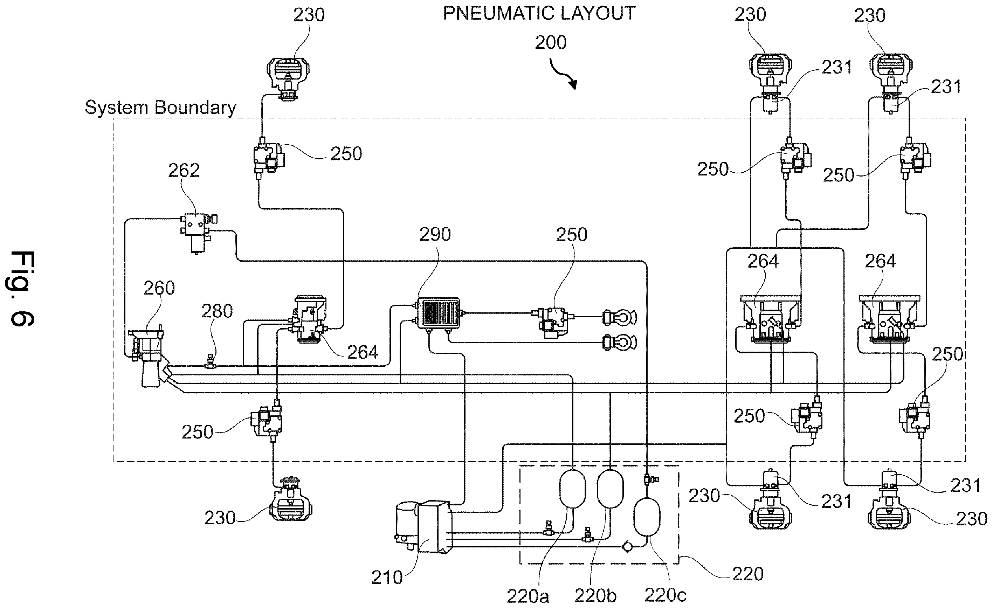

Compressed air is released into atmosphere when the brake pressure is released. Release of air to atmosphere can happen at different locations (also at the same time) of the pneumatic service brake layout (a detailed pneumatic layout is shown in **Fig. 6**).

Through the second mode of the secondary parking brake operation 102 (e.g., build state), the pressure in the air reservoir, p_{Supply}, can be dropped but at a lower rate compared to first mode of the secondary parking brake operation 101 (e.g., deflate state). Therefore, the activation time of the parking brake, t_{PB}, in the second mode of the secondary parking brake operation 102 is longer than that in the first mode of the secondary parking brake operation 101.

The advantage of the pump down strategy of the second mode of the secondary parking brake operation 102 is that all wheel ends can be continuously braked during the process.

The minimum pressure in use during the pumping (applying and releasing) of the service brake pressure does not need to be zero and can maintain the minimum needed pressure to prevent the vehicle from rolling. In this case, the pumping frequency may have no relevance for preventing the vehicle from rolling.

Alternatively, it can be ensured to prevent the vehicle from rolling, when the pumping frequency is sufficiently high even though the pumping pressure at the actuator is dropping to zero for a small amount of time. Therefore, in the second mode of the secondary parking brake operation 102, the wheel end pressure, p_{wheel}, will not drop to zero due to the pneumatic system damping.

In some embodiments, the brake booster 262 may be the actuator used for pumping. In some embodiments, the electro-pneumatic module 264 may be the actuator used for pumping. Alternatively, the electronic control unit may select to activate either the brake booster 262 or the electro-pneumatic module 264 as the actuator.

In the second mode of the secondary parking brake operation 102, the pumping (applying and releasing) of the service brake must be performed with a certain time interval, t_{cycle}.

The time interval, t_{cycle}, is chosen such that the service brake pressure at the wheel ends, p_{wheel}, does not fall below a certain minimum value defined as minimum control pressure, pᵣₒₗₗ, whereas the pressure at the actuator used for pumping (brake booster 262 or electro-pneumatic module 264) can drop to zero. It is to be understood, that at the level of the minimum control pressure, pᵣₒₗₗ, there is not enough braking force to hold vehicle at a standstill.

The minimum brake pressure is defined as a release pressure, pᵣₑₗₑₐₛₑ, and corresponds to a pressure level at which the brake release ends and the next brake application begins (see on **Fig. 4** the minima of the service brake pressure at the wheel ends, p_{wheel}). The minimum brake pressure, pᵣₑₗₑₐₛₑ, keeps the vehicle at a standstill until the next pulse of service brake is applied.

The value of the minimum brake pressure, pᵣₑₗₑₐₛₑ, can ensure a partial braking even in the release state of service brake application and can keep the vehicle at a standstill. As soon as the pressure drops below the threshold pressure, p_{threshold}, parking brakes are automatically engaged. Activation time of the parking brake, t_{PB}, is the time taken for the pump down process 100 to engage the parking brake.

**Fig. 4** further shows a critical pressure range when the pumping down process 100 is in the second mode of the secondary parking brake operation 102. The critical pressure range is located between the minimum control pressure, pᵣₒₗₗ, and the minimum brake pressure, pᵣₑₗₑₐₛₑ. The critical pressure range is a predetermined gap. The parked vehicle is considered unsafe when the pressure is in this range. When the pressure sensor 280 detects that the pressure level is in the critical pressure range, a warning message may be issued (e.g. by an electronic control unit). The electronic control unit communicates the warning message to the virtual driver or human driver that there is insufficient braking force to keep the vehicle at a standstill and performing the pump down process 100 is denied or is aborted.

The pump down process 100 can be performed using any of the above defined first mode of the secondary parking brake operation 101, second mode of the secondary parking brake operation 102, or a combination thereof.

The combination, sequence, and states of using one or more control pressure valves 250 can be varied to adjust the activation time of the parking brake, t_{PB}, and feasibility of the pumping down process 100 based on the steepness of the slopes and the loading conditions of the vehicle.

Having the actuator pressure (e.g., the control pressure provided by the brake booster 262 and/or the electro-pneumatic module 264 and/or the trailer pressure control module 290) not dropping to zero pressure might involve the use of a pressure sensor 280 to monitor and control the minimum control pressure, pᵣₒₗₗ, whereas the approach to ensure some minimum pumping down frequency (changing periodically the control pressure) depends on the pneumatic layout. One embodiment of the pneumatic layout is shown on **Fig. 6****.**

Additionally, the first mode of the secondary parking brake operation 101 and second mode of the secondary parking brake operation 102 can be combined to gain maximum safety depending on the system failure state.

A system failure may occur when one or more of the following components of the brake system 200 are not available: valves 250, pressure sensors 280, other pressure sensors, steering angle sensor 284, wheel speed sensors, road wheel angle sensor 286, etc.

A continuous steady application of service brake pressure, p_{wheel}, could not be sufficient to release air through this pressure control valve 250 configuration and a series of apply-release method of service brake application may be used to deflate air from the air reservoir 220 thus reducing the supply pressure.

Once the pump down process 100 (first mode of the secondary parking brake operation 101 and/or second mode of the secondary parking brake operation 102) has started, the brake system 200 will gradually lose the service brake pressure, p_{wheel}, and the remaining pressure in the air reservoir(s) 220, p_{supply}, limit the maximum brake force available until the parking brakes are engaged. Hence, it is important to determine the feasibility of the vehicle to remain at a standstill on the given slope, loading condition and other unsafe state in following situations:
- performing a roll test of spring brakes; and/or
- performing a roll test at the threshold pressure.

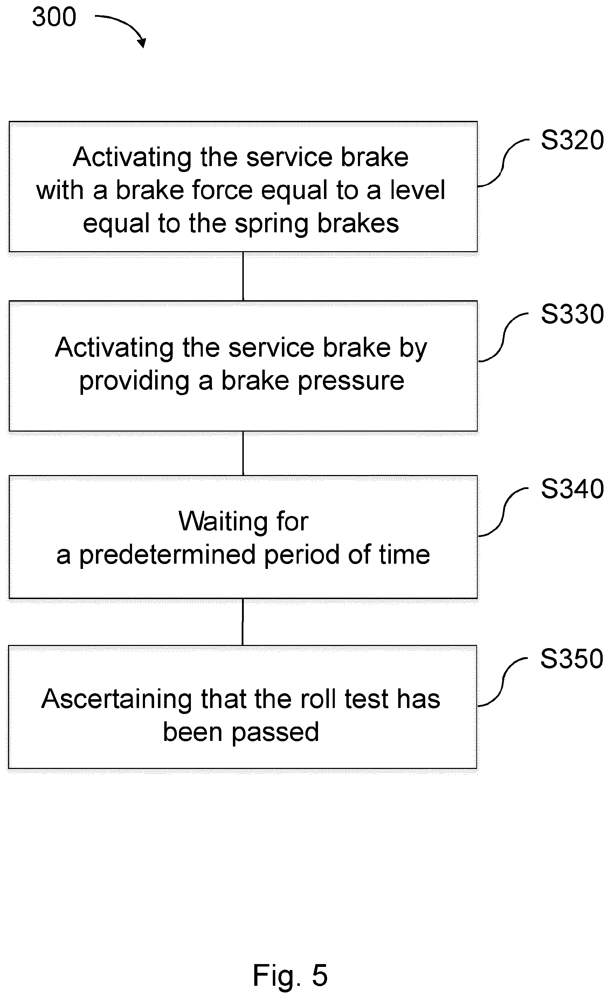

**Fig. 5** shows a flow diagram of a steps of performing a roll test 300 according to an embodiment of the present invention.

The roll test 300 may include one or more or all of the following steps:
- step 320: activating the service brake with a brake force equal to a level equal to the spring brakes (e.g., at a wheel, where a spring brake is installed);
- step 330: activating the service brake by providing brake pressure, the brake pressure associated to the threshold pressure, p_{threshold}, utilized in the secondary parking brake operation;
- step 340: waiting for a predetermined period of time;
- step 350: ascertaining that the roll test has been passed when the commercial vehicle remains at a standstill during the roll test.

In some embodiments, all steps of the roll test may be performed in the given order, but the third step (step 330: activating the service brake by providing brake pressure, the brake pressure associated to the threshold pressure utilized in the secondary parking brake operation) is omitted.

For example, the roll test 300 of the parking brake can be performed at the spring brake. The parking brake roll test 300 of the spring brakes 230 is a method where the service brake force is used to determine the safety of parking vehicle at a chosen location, wherein the risk of an unsafe state of the parked vehicle could arise:
- the virtual or human driver has made incorrect judgement regarding slope or loading condition and applied parking brakes;
- the virtual or human driver has received incorrect information of slope or loading condition and applied parking brakes.

Before performing the roll test 300, it shall be ensured that there is no harm to other people or the environment, when the towing vehicle starts to roll away until it is stopped again by applying higher brake pressure. Preferably, the test is done with the vehicle facing downhill to provide maximum controllability along with the best environmental sensing if the vehicle start to roll off.

In more details, the steps of roll test 300 of the spring brakes 230 may be at least one of the following:
- applying service brake pressure equivalent to total spring brake force. This can be done by applying brake force only to the wheel ends where the spring brake 230 is installed, or by applying equivalent pressure to all wheel ends;
- waiting for defined time (e.g., 5 seconds) and checking if the vehicle is rolling (e.g. by checking the wheel speed sensors);
- providing a result of the roll test of the spring brakes 230 to the electronic control unit of the brake system 200.

The checking, whether the vehicle rolls off or not, can be done continuously during the waiting. If the vehicle starts rolling, the waiting can be aborted and the brake pressure may immediately be increased.

It is understood that the vehicle may couple to a trailer, which can be a European trailer following EU regulation, i.e. not braked when applying the parking brake by the driver, or a North American trailer following US regulations, i.e. the trailer is braked when the parking brake is applied by the driver, or any other suitable trailers. In addition, EU trailers, e.g., do not apply spring brake automatically when the air reservoir pressure, p_{supply}, drops to a low level.

In case of commercial vehicle with trailers, the service brake pressure is applied to the towing vehicle and to the towed vehicle. In case, the trailer is equipped with spring brakes 230 that automatically apply when the air reservoir pressure, p_{supply}, drop below a threshold pressure, p_{theshold}, (like North American trailers), the spring brake force of trailer along with towing vehicle spring brakes is considered while applying the equivalent service brake force.

In some embodiments, all steps of the roll test can be performed in the given order, but the second step (step 320: activating the service brake with a brake force equal to a level equal to the spring brakes) is omitted.

For example, the roll test of the parking brake can be performed at the threshold pressure. The parking brake roll test 300 at the threshold pressure is a method where the service brake force is used to determine the safety of parking vehicle at a chosen location, wherein the above mentioned risk of an unsafe state of the parked vehicle could arise.

In more details, the steps of roll test 300 at the threshold pressure may be at least one of the following:
- applying service brake pressure equivalent to threshold pressure, p_{threshold}. This can be done by applying pressure when spring brakes 230 are just starting to engage but not yet engaged;
- waiting for a defined time (e.g., 5 seconds) and checking if the vehicle is rolling (e.g. by checking the wheel speed sensors);
- providing a result of roll test at the threshold pressure to the electronic control unit of the brake system 200.

In on embodiment, in step S340 of the roll test 300, the predetermined period of time can shorter than 5 seconds, for example 1 second. In some embodiments, in step S340 of the roll test 300, the predetermined period of time and can be longer than 5 seconds, for example 10 seconds. Advantageously, the ECU can determine the length of the defined time (e.g., the predetermined period of time) based on the slope and loading condition of the parked vehicle.

The result of the roll test 300 (of the spring brakes 230 and/or at the threshold pressure) may be one of the following:
- the roll test 300 has been passed, the vehicle is stationary, and performing the pump down process 100 is permitted; or
- the roll test 300 has been failed, the vehicle is rolling, and performing the pump down process 100 is denied.

Failure of the roll test 300 means that the pump down process 100 of the secondary parking brake operation should not be started. In this case, the pressure of service brakes is increased to stop the rolling vehicle and driver or autonomous vehicle is allowed to drive to a new location.

Performing the roll test 300 may be omitted if adequate information regarding the feasibility of holding the vehicle at a standstill on a given slope, spring brake force, the loading condition of the vehicle is available. Adequate information can also be that the primary park brake system is fully functional.

The embodiment illustrated in **Fig. 2** is generally similar to the embodiment illustrated in Fig. 6, the same numbering are utilized to designate same components.

**Fig. 6** shows a pneumatic layout of the brake system 200 according to an embodiment.

The parking brake system 210 may be a global scalable air treatment (GSAT) system comprising an air filter module and a compressor (not show). The compressor is configured to generate and maintain the air pressure in the brake system 200 and to supply air to the air reservoir 220.

Advantageously, there is more than one air reservoir 220 in the brake system 200, for example a primary air reservoir 220a, a secondary air reservoir 220b, and a supply air reservoir 220c.

The primary air reservoir 220a is adapted to supply air through the foot brake module 260 and/or electro-pneumatic module 264 to actuate the brake components on the steered axle (e.g. front wheel brakes 230). The secondary air reservoir 220b is adapted to supply air through the foot brake module 260 and/or electro-pneumatic module 264 to actuate the brake components on the non-steered axle(s) (e.g. rear wheel brakes 230 together with a spring brake chamber 231 as a combination wheel brake). The supply air reservoir 220c is adapted to supply air to the foot brake module 260 through a brake booster 262 to actuate the brake components on the steered axle and/or on the one or more the non-steered axles.

A primary air reservoir pressure sensor may be located between the parking brake system 210 and the primary air reservoir 220a and is configured to monitor the pressure in the primary air reservoir. A secondary air reservoir pressure sensor may be located between the parking brake system 210 and the secondary air reservoir 220b and is configured to monitor the pressure in the secondary air reservoir. A supply air reservoir pressure sensor may be located between the supply air reservoir 220c and the brake booster 262 and is configured to monitor the pressure in the supply air reservoir. A check valve may be located between the parking brake system 210 and the supply air reservoir 220c and is configured to maintain the air pressure.

Advantageously, the brake system 200 comprises at least three electro-pneumatic modules 264, each electro-pneumatic module 264 being associated with an axle of the truck or tractor of the commercial vehicle. The electro-pneumatic module 264 associated with the wheel brakes 230 on the steered axle may be different from the electro-pneumatic module 264 associated with the wheel brakes 230 on the non-steered axle.

A pressure sensor 280 may be located between the foot brake module 260 and the electro-pneumatic module 264 associated with the wheel brakes 230 on the steered axle. The pressure sensor 280 may be configured to monitor the control pressure, pcontroi.

Advantageously, the brake components on the steered axle are at least two air disc service brakes (e.g., front wheel brakes 230) and the brake components on the non-steered axle are at least four air disc service brakes (e.g., rear wheel brakes 230). Each wheel brake 230 may be associated with a pressure control valve 250.

It is to be understood that the air disc service brake (e.g., rear spring brake 230) may be connected to a spring brake chamber 231 to form a combination wheel brake on the non-steered axle.

In addition, the foot brake module 260 may provide a control pressure to a trailer pressure control module 290. The parking brake system 210 may provide directly the control pressure to the trailer pressure control module 290. The trailer pressure control module 290 is configured to provide control coupling and supply coupling to one or more trailers. A control pressure valve 250 may be located between the trailer pressure control module 290 and the control coupling.

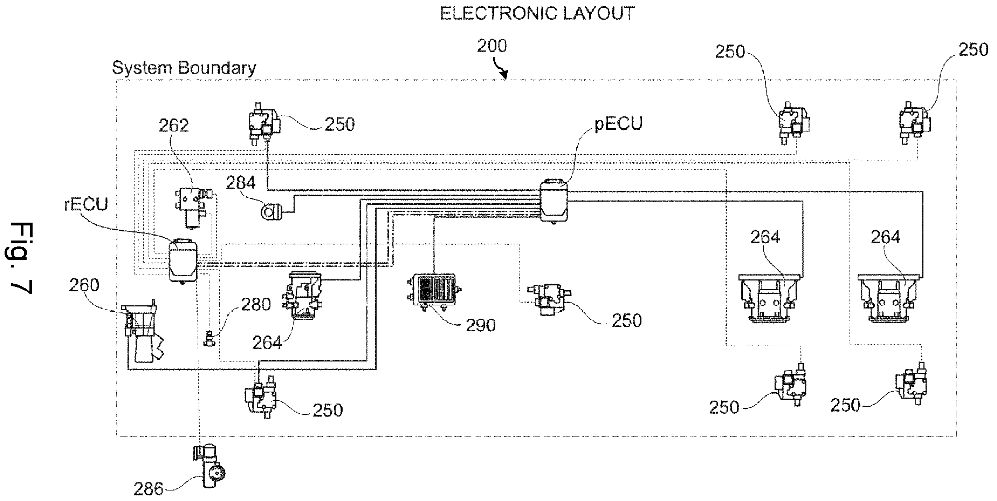

The embodiment illustrated in **Fig. 2** is generally similar to the embodiment illustrated in **Fig. 7**, the same numbering are utilized to designate same components.

**Fig. 7** shows an electronic layout of the brake system 200 according to an embodiment. The electronic components of the brake system 200 are connected to an electronic control unit ECU. The ECU comprises a processor and a memory (not shown) with stored instructions that, when executed on the processor, to cause to perform the steps of the method for providing a secondary parking brake operation and the steps of a roll test.

For example, the electronic components of the brake system 200 can communicate with the ECU. The electronic components of the brake system 200 may include but not limited to sensors, pressure control valves 250, foot brake module 260, brake booster 262, electro-pneumatic modules 264, and trailer pressure control module 290. The communication between the ECU and electronic components of the brake system 200 the can be performed via a controller area network (CAN).

For example, sensors in the brake system 200 can be selected any one of the following: pressure sensors 280, other pressure sensors (e.g., between the parking brake system 210 and the air reservoir 220), a steering angle sensor 284 associated with the steered axle of the vehicle, at least one road wheel angle sensor 286, wheel speed sensors (not shown) associated with each wheel, lining wear sensors (not shown) associated with each wheel.

Advantageously, the brake system 200 comprises a primary electronic control unit pECU and secondary (redundant) electronic control unit rECU. A primary electrical connection is between the primary electronic control unit pECU and the secondary electronic control unit rECU. Therefore, the communication in the vehicle-mounted network is maintained even is one of the electronic control unit (pECU or rECU) is faulty. The dashdotted line indicates the primary electrical connection.

In this embodiment, solid line electrical connections connect the electronic components of the brake system 200 and the pECU, and dashed line electrical connections connect the electronic components of the brake system 200 and the rECU. In some embodiments, the solid line electrical connection is interchangeable with the dashed line electrical connection.

A warning message is sent out to the electronic control unit if the vehicle cannot be held at a standstill and/or one or more of the following components of the brake system 200 are not available: valves (e.g., control pressure valve 250), pressure sensors 280, other pressure sensors, steering angle sensor 284, wheel speed sensors, road wheel angle sensor 286, lining wear sensors.

In case the warning message is sent out to the electronic control unit (pECU, rECU), neither the first mode of the secondary parking brake operation 101 nor the second mode of the secondary parking brake operation 102 can be performed. The electronic control unit may communicate the warning message to the virtual driver and/or to the human driver. However, if only the pressure sensor 280 is faulty, the parking brake may still be operable and the brake booster 262 can still engage the parking brake safely.

To overcome limitations of conventional systems, according to embodiments, the method of providing a secondary parking brake operation can be performed using an existing electronic control unit in a parking brake system, which is more specifically suitable for autonomous vehicles, but is also valid for manual vehicles.

The description and drawings merely illustrate the principles of the disclosure. It will thus be appreciated that those skilled in the art will be able to devise various arrangements that, although not explicitly described or shown herein, embody the principles of the disclosure and are included within its scope.

### LIST OF REFERENCE SIGNS

- 100: pump down process
- 101: first mode of the secondary parking brake operation (e.g., deflate state)
- 102: second mode of the secondary parking brake operation (e.g., build state)
- 200: brake system
- 210: parking brake system
- 220: air reservoir
- 220a, 220b, 220c: primary air reservoir, secondary air reservoir, supply air reservoir
- 225: compressor
- 230: wheel brake (e.g. service brake with or without spring brakes)
- 231: spring brake chamber (e.g., wheel side brake chamber)
- 233: brake cylinder
- 250: pressure control valve
- 260: foot brake module
- 262: brake booster
- 264: electro-pneumatic module
- 280: pressure sensor
- 284: steering angle sensor
- 286: road wheel angle sensor
- 290: trailer pressure control module
- 300: roll test
- p_{control}: control pressure (e.g., controlling a pressure modulator)
- pᵣₒₗₗ: minimum control pressure
- p_{wheel}: brake pressure (e.g., service brake pressure at the wheel ends)
- pᵣₑₗₑₐₛₑ: minimum brake pressure
- p_{supply}: pressure in the air reservoir
- p_{threshold}: threshold pressure of the air reservoir
- t_{PB}: activation time of the parking brake
- t_{cycle}: time interval

## Claims

1. A method for providing a secondary parking brake operation of a commercial vehicle, the commercial vehicle comprises a brake system (200) with an air reservoir (220), at least one spring brake (230), a parking brake system (210) allowing a primary parking brake operation, the parking brake system (210) being configured to activate the at least one spring brake (230) automatically when a pressure in the air reservoir (p_{supply}) drops below a threshold pressure (p_{threshold}),
**the method being characterized by**
- bringing (S110) the commercial vehicle to a standstill; and
- lowering (S120) the pressure in the air reservoir (p_{supply}) to the threshold pressure (p_{threshold}) to activate the at least one spring brake (230) as secondary parking brake operation.

2. The method of claim 1, wherein the brake system(200) includes a compressor (225) for providing the pressure in the air reservoir (p_{supply}), wherein the step of bringing (S110) the commercial vehicle to a standstill includes deactivating the compressor (225).

3. The method according to claim 1 or claim 2, the brake system (200) includes at least one brake cylinder (233) associated with at least one wheel, a brake pressure (p_{wheel}) in the brake cylinder (233) being controllable by a pressure control valve (250), wherein the step of lowering (S120) the pressure in the air reservoir (p_{supply}) includes the following:
- activating a first mode of the secondary parking brake operation (101) by depleting the reservoir pressure through the pressure control valve (250).

4. The method according to claim 3, wherein the commercial vehicle is a towing vehicle configured to couple to one or more towed vehicles, the at least one brake cylinder (233) is selected to be one of the following:
- being on a driver side of the commercial vehicle or opposite thereto,
- being on a steered axle,
- being on a non-steered axle,
- being on the towing vehicle or on the one or more towing vehicles, when coupled to the one or more trailers.

5. The method according to any one of claims 1 to 4, the brake system (200) provide a control pressure (p_{control}), the brake system (200) further includes a brake booster (262) for providing a first control pressure to a foot brake module (260) and/or at least one electro-pneumatic module (264) for modulating the brake pressure (p_{wheel}) in response to a second control pressure, wherein the control pressure (p_{control}) is the first control pressure and/or the second control pressure,
and wherein the step (S120) of lowering the pressure in the air reservoir (p_{supply}) includes the following:
- activating a second mode of the secondary parking brake operation (102) by using the brake booster (262) and/or by using the at least one electro-pneumatic module (264) to change periodically the control pressure (p_{control}).

6. The method according to claim 5, the brake system includes a service brake (270) that controls braking operations during driving the commercial vehicle, wherein the step of changing periodically the control pressure (p_{control}) includes the following:
- adapting a time interval (t_{cycle}) of periods of the periodic changing, wherein the adapted time interval (t_{cycle}) ensure a minimum brake pressure (p_{Release}) to hold the commercial vehicle at a standstill by using the service brake.

7. The method according to claim 5 or claim 6, the brake system includes a pressure sensor (280) configured to monitor the control pressure (p_{control}) and/or the brake pressure (p_{wheel}), wherein the step of adapting the time interval (t_{cycle}) includes determining a minimum brake pressure and/or a minimum control pressure (pᵣₒₗₗ) associated to the minimum brake pressure (pᵣₑₗₑₐₛₑ) utilizing the pressure sensor (280).

8. The method according to any one of claims 1 to 7, wherein the step (S110) of bringing the commercial vehicle to a standstill further includes:
- performing a roll test (300) of the commercial vehicle to ensure that the commercial vehicle remains at a standstill when starting the secondary parking brake operation (101, 102).

9. The method according to claim 8, wherein the roll test (300) includes at least one of the following:
- activating (S320) the service brake (270) with a brake force equal to a level equal to the at least one spring brake (230), the service brake (270) is preferably activated at a wheel, where the at least one spring brake is installed,
- activating (S330) the service brake (270) by providing brake pressure, the brake pressure associated to the threshold pressure (p_{threshold}) utilized in the secondary parking brake operation,
- waiting (S340) for a predetermined period of time;
- ascertaining (S350) that the roll test has been passed when the commercial vehicle remains at a standstill during the roll test (300).

10. The method according to claim 9 as far as referred back claim 2, wherein the step of deactivating the compressor (225) is only performed when the roll test (300) has been passed.

11. The method according to any one of claims 1 to 10, the brake system includes wheel speed sensors configured to detect a wheel speed of the at least one wheel, wherein the step of bringing (S110) the commercial vehicle to a standstill includes measuring the wheel speed.

12. A parking brake system for a commercial vehicle,
**characterized by comprising**
an electronic control unit including a processor and a memory with stored instructions that, when executed on the processor, to cause to perform the steps of the method according to any one of claims 1 to 11.

13. A commercial vehicle, the commercial vehicle,
**characterized by**
a parking brake system of claim 12.
